(19) Europäisches Patentamt
European Patent Office
Office européen des brevets

(11) EP 1 537 750 B1

(12) EUROPÄISCHE PATENTSCHRIFT

(45) Veröffentlichungstag und Bekanntmachung des Hinweises auf die Patenterteilung:
**23.11.2005 Patentblatt 2005/47**

(21) Anmeldenummer: **03807783.0**

(22) Anmeldetag: **07.08.2003**

(51) Int Cl.[7]: **H04N 17/00**, H04N 5/455

(86) Internationale Anmeldenummer:
**PCT/EP2003/008792**

(87) Internationale Veröffentlichungsnummer:
**WO 2004/034712 (22.04.2004 Gazette 2004/17)**

(54) **VERFAHREN ZUM BESTIMMEN DER HÜLLKURVE EINES MODULIERTEN SIGNALS**

METHOD FOR DETERMINING THE ENVELOPE OF A MODULATED SIGNAL

PROCEDE POUR DETERMINER L'ENVELOPPANTE D'UN SIGNAL MODULE

(84) Benannte Vertragsstaaten:
**DE DK FR GB IT SE**

(30) Priorität: **12.09.2002 DE 10242333**

(43) Veröffentlichungstag der Anmeldung:
**08.06.2005 Patentblatt 2005/23**

(73) Patentinhaber: **Rohde & Schwarz GmbH & Co. KG**
**81671 München (DE)**

(72) Erfinder: **HOFMEISTER, Martin**
**81541 München (DE)**

(74) Vertreter: **Körfer, Thomas et al**
**Mitscherlich & Partner,**
**Patent- und Rechtsanwälte,**
**Sonnenstrasse 33**
**80331 München (DE)**

(56) Entgegenhaltungen:

**EP-A- 1 113 637**
**US-A- 5 469 127**
**US-B1- 6 272 172**
**US-B1- 6 314 146**

- **SGRIGNOLI G.: "MEASURING PEAK/AVERAGE POWER RATIO OF THE ZENITH/AT&T DSC-HDTV SIGNAL WITH A VECTOR SIGNAL ANALYZER" IEEE TRANSACTIONS ON BROADCASTING., Bd. 39, Nr. 2, 30. Juni 1993 (1993-06-30), Seiten 255-264, XP002262767 IEEE INC. NEW YORK., US ISSN: 0018-9316**
- **RHODES CHARLES W.: "MEASURING PEAK AND AVERAGE POWER OF DIGITALLY MODULATED ADVANCED TELEVISION SYSTEMS" IEEE TRANSACTIONS ON BROADCASTING., Bd. 38, Nr. 4, 30. Dezember 1992 (1992-12-30), Seiten 197-201, XP000372626 IEEE INC. NEW YORK., US ISSN: 0018-9316**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 537 750 B1

## Beschreibung

Die Erfindung betrifft ein Verfahren zum Bestimmen der Hüllkurve eines modulierten Signals, beispielsweise für die Ermittlung der Werte für ein CCDF-Diagramm.

Insbesondere für die Ermittlung der CCDF (Complementary Cumulative Distribution Function) aber auch für andere Anwendungen ist die Bestimmung der Hüllkurve eines modulierten Signals erforderlich. Das CCDF-Diagramm gibt die Wahrscheinlichkeit an, daß der Signalpegel der Hüllkurve des analysierten Signals einen bestimmten Pegelwert überschreitet. Aus dem Verlauf des CCDF-Diagramms läßt sich u. a. der Parameter des Crestfaktors bestimmen, der das Verhältnis der maximal im Signal vorkommenden Leistung bezogen auf die mittlere Leistung angibt. Der Crestfaktor unterstützt den Betreiber eines modulierten Hochfrequenzsenders, die optimale Aussteuerung der Senderverstärker zu bestimmen. Einerseits soll die gesendete Leistung möglichst hoch sein, damit der Signal-Rauschabstand an den Empfängern möglichst groß ist. Andererseits darf die Sendeleistung nicht zu groß sein, um Zerstörungen bei den Senderverstärkern durch kurze Leistungsspitzen zu vermeiden. Wird der gemessene CCDF-Verlauf gemeinsam mit dem Verlauf eines idealen Signals dargestellt, können auch Rückschlüsse auf Nichtlinearitäten und Begrenzungseffekte im gesendeten Signal vorgenommen werden.

Aus der DE 199 10 902 A1 ist eine Meßwerteerfassungs- und Anzeigevorrichtung für ein CCDF-Diagramm bekannt. Auch dort besteht ein Schritt der Signalaufbereitung darin, die Hüllkurve des modulierten Signals bzw. die Leistung der Hüllkurve zu bestimmen. In Spalte 10 Zeile 47 bis Spalte 11 Zeile 28 wird zur Bestimmung der Hüllkurvenleistung vorgeschlagen, das Signal mit der vierfachen symbolfrequenz abzutasten, die Digitalwerte einer aus vier Abtastwerten bestehenden Gruppe zu quadrieren, zu summieren und dann durch 4 zu teilen. Somit entsteht ein gleitender Mittelwert der Leistungswerte der Momentan-Amplitude des modulierten Signals, was einer Tiefpaßfilterung entspricht. Nachteilig bei dieser Vorgehensweise ist jedoch, daß die dabei notwendige Quadrierung der abgetasteten Digitalwerte zu höherfrequenten Spektralanteilen führt. Die darauf folgende nicht-ideale Tiefpaßfilterung führt zu Ungenauigkeiten bei der CCDF-Messung. Genauer gesagt, führt die Quadrierung der Abtastwerte zu höherfrequenten Spektralanteilen, die durch die Mittelung (= Filterung mit einem Filter mit sin(x)/x-Frequenzgang) nicht mehr ordentlich entfernt werden.

Der Erfindung liegt deshalb die Aufgabe zugrunde, ein Verfahren zur Bestimmung der Hüllkurve eines modulierten Signals anzugeben, das mit einer relativ hohen Genauigkeit arbeitet.

Die Aufgabe wird durch die Merkmale des Anspruchs 1 gelöst.

Im Gegensatz zu dem bekannten Verfahren erfolgt die Ermittlung der Hüllkurve erfindungsgemäß nicht durch eine Tiefpaßfilterung, sondern die digitalen Abtastwerte werden in den Frequenzbereich fouriertransformiert. Im Frequenzbereich wird dann der Bereich positiver Frequenzen bzw. der Bereich negativer Frequenzen entfernt. Es folgt dann eine Fourier-Rücktransformation in den Zeitbereich. Erst dann werden die Beträge der rücktransformierten Abtastwerte gebildet. Es wird in dieser Anmeldung später noch gezeigt, daß der Absolutbetrag der rücktransformierten Abtastwerte die Hüllkurve des modulierten Hochfrequenzsignals darstellt.

Das erfindungsgemäße Verfahren hat im Gegensatz zur Betragsbildung und anschließenden Tiefpaßfilterung den Vorteil, daß die Durchführung des Verfahrens unabhängig von der Qualität der Tiefpaßfilterung, unabhängig von der Art des Signals und von dessen spektralen Lage und außerdem unabhängig vom Synchronisationszustand des zu vermessenden Hochfrequenzsignals ist. Das erfindungsgemäße Verfahren ist zudem wesentlich genauer als das bekannte Verfahren mit Tiefpaßfilterung.

Die Unteransprüche betreffen vorteilhafte Weiterbildungen der Erfindung.

Es ist vorteilhaft, neben dem Bereich der negativen bzw. positiven Frequenzen auch den Gleichanteil bei der Frequenz 0 nach der Fouriertransformation in den Frequenzbereich zu entfernen. Dadurch ist gewährleistet, daß der Gleichspannungs-Versatz eines nicht idealen Analog/Digital-Wandlers keinen Einfluß auf das erfindungsgemäße Verfahren hat. Das ideale Signal hat in der Zwischenfrequenz-Ebene keinen Gleichspannungsanteil, so daß die Entfernung des Gleichspannungsanteils das Meßergebnis nicht verfälscht.

Ferner ist es sinnvoll, die in den Zeitbereich rücktransformierten Abtastwerte nur in einem solchen begrenzten Bereich weiterzuverarbeiten, daß die durch die Fouriertransformation und inverse Fouriertransformation hervorgerufene zyklische Fortsetzung des Signals unterdrückt wird.

Die Ansprüche 6, und 7 betreffen ein entsprechendes Computerprogramm bzw. Computerprogramm-Produkt auf der Grundlage des erfindungsgemäßen Verfahrens.

Die Erfindung wird nachfolgend unter Bezugnahme auf die Zeichnung näher beschrieben. In der Zeichnung zeigen:

Fig. 1 ein Beispiel eines CCDF-Diagramms;

Fig. 2 ein Blockschaltbild des erfindungsgemäßen Verfahrens;

Fig. 3 ein Diagramm zur Erläuterung der Funktionsweise des erfindungsgemäßen Verfahrens;

Fig. 4 die in den Frequenzbereich fouriertransformierten Abtastwerte und

Fig. 5 die in den Zeitbereich rücktransformierten Abtastwerte.

Das erfindungsgemäße Verfahren wird nachfolgend für das Anwendungsbeispiel der Bestimmung der Momentanleistung der Hüllkurve für ein CCDF-Diagramm erläutert. Wie bereits ausgeführt, ist das erfindungsgemäße Verfahren jedoch nicht auf diese Anwendung beschränkt und eignet sich für alle Anwendungen, bei welchen der momentane Pegel der Hüllkurve oder aus diesem abgeleitete Signalwerte, wie z. B. die Leistung, also das Quadrat des Pegels, benötigt werden.

Fig. 2 demonstriert das erfindungsgemäße Verfahren anhand eines Blockschaltbilds. Das durch ein Modulationssignal modulierte hochfrequente Eingangs-Signals S wird zunächst an einer Abtast- und Halteschaltung 1 digital abgetastet. Dabei entstehen digitale Abtastwerte An des Eingangs-Signals S. Die Abtastwerte An werden dann beispielsweise mit einem Algorithmus der schnellen Fouriertransformation (FFT, Fast Fourier Transform) einer Fouriertransformation unterworfen. Dadurch entstehen die fouriertransformierten Abtastwerte $B_n$. Die Fouriertransformation ist in Fig. 2 durch den Block 2 veranschaulicht.

Durch die Fouriertransformation eines abgetasteten reellen Signals entstehen bekanntermaßen fouriertransformierte Abtastwerte, die sich sowohl über den Bereich negativer Frequenzen als auch über den Bereich positiver Frequenzen erstrecken. Erfindungsgemäß wird von den fouriertransformierten Abtastwerten $B_n$ entweder der Bereich negativer Frequenzen oder der Bereich positiver Frequenzen entfernt. Läuft der Index n, welcher die fouriertransformierten Abtastwerte $B_n$ indiziert, beispielsweise von $-2^N/2$ bis $2^N/2-1$, wobei N eine ganze natürliche Zahl ist, so entspricht der Bereich negativer Frequenzen den Abtastwerten $B_n$ mit $n<0$ bzw. der Bereich positiver Frequenzen entspricht den Abtastwerten $B_n$ mit $n>0$.

Die verbleibenden Abtastwerte, die entweder nur positiv oder nur negativ sind, sind in Fig. 2 mit $B'_n$ bezeichnet. Die Beschneidung der Abtastwerte im negativen Frequenzbereich ist in Fig. 2 durch den Block 3 veranschaulicht, welcher eine Übertragungsfunktion H(f) hat, welche nur im Bereich positiver Frequenzen von 0 verschieden ist. Diese seitenbandbereinigten, fouriertransformierten Abtastwerte $B'_n$ werden anschließend durch eine inverse Fouriertransformation in den Zeitbereich zurücktransformiert. Dabei kann ebenfalls eine schnelle digitale Fourier-Rücktransformation (IFFT, Inverse Fast Fourier Transform) zum Einsatz kommen, was in Fig. 2 durch den Block 4 veranschaulicht ist. Im Zeitbereich stehen dann die rücktransformierten Abtastwerte $C_n$ zur Verfügung, deren Betrag schließlich noch in dem Betragsbilder 5 zu bilden ist. Der Betrag der in den Zeitbereich rücktransformierten Abtastwerte ist in Fig. 2 mit $D_m$ bezeichnet.

Für den Anwendungsfall des CCDF-Diagramms muß nun in einem Block 6 die relative Häufigkeit festgestellt werden, mit welcher das Quadrat der Betrags-Abtastwerte $D^2{}_m$, welcher der Leistung entspricht, in Relation zur durchschnittlichen Leistung $D^2{}_{eff}$ auf einer in dB skalierten logarithmischen Skala einen Schwellwert x überschreitet. Zweckmäßigerweise wird die Quadrierung nicht vor, sondern nach der Logarithmierung durchgeführt, d. h. statt einer Multiplikation mit dem Faktor 10 erfolgt eine Multiplikation mit dem Skalierungsfaktor 20:

$$10 \cdot \log \frac{D_m^2}{D_{eff}^2} = 10 \cdot \log \left( \frac{D_m}{D_{eff}} \right)^2 = 20 \cdot \log \frac{D_m}{D_{eff}} \quad (1)$$

Das CCDF-Diagramm kann dann auf einer Anzeigeeinrichtung 7, beispielsweise einem Bildschirm, zur Anzeige gebracht werden.

Wie Fig. 5 zeigt, ist das zunächst fouriertransformierte und dann in den Zeitbereich zurücktransformierte Signal bestehend aus den digitalen Abtastwerten $C_n$ aufgrund der endlichen Zeit- und Frequenzabtastung zyklisch, d. h. im in Fig. 5 dargestellten Beispiel hat das Signal eine Zyklus-Länge $m_2-m_1-1$. Der Index n läuft in Fig. 5 von 0 bis $2^N-1$. Es ist daher zweckmäßig, die rücktransformierten Abtastwerte $C_n$ nur in einem begrenzten Bereich 13 weiterzuverarbeiten, so daß die zyklische Fortsetzung unterdrückt wird, d. h. es gilt $C_m=C_n$ mit $m_1 \le m \le m_2$. Nur von diesem begrenzten Ausschnitt $C_m$ der rücktransformierten Abtastwerte wird der Betragswert berechnet, was der Bezeichnung in Fig. 2 entspricht. Die Betragsbildung erfolgt dann nach der Formel

$$D_m = |C_m| = \sqrt{\mathrm{Re}\{C_m\}^2 + \mathrm{IM}\{C_m\}^2} \quad (2)$$

Die Schritte zur Bestimmung der Beträge der rücktransformierten Abtastwerte $D_m$ werden so lange wiederholt, bis genügend viele Werte $D_m$ zur Verfügung stehen, daß daraus nach den bekannten Regeln der Effektivwert $D_{eff}$ der Wertefolge bestimmt werden kann. Die Leistung dieses Effektivwerts ist dann der Bezugswert für die Angabe des Pegels auf der horizontalen Achse des CCDF-Diagramms (0 dB). An der vertikalen Achse des CCDF-Diagramms wird der zum jeweiligen Leistungspegel gehörende CCDF-Wert aufgetragen, d. h. diejenige relative Häufigkeit, mit welcher der Leistungswert x relativ zur mittleren Leistung $D^2_{eff}$ überschritten wird. Dies erfolgt mittels der Formel

$$CCDF(x) = p\left(20 \cdot \log_{10} \frac{D}{D_{eff}} \geq x\right) \quad [x] = \mathrm{dB} \quad (3)$$

mit

p: Auftrittswahrscheinlichkeit bzw. relative Häufigkeit
D: Momentanwert der Hüllkurve
$D_{eff}$: Effektivwert der Hüllkurve

Anstatt, wie hier, Pegelgrößen bzw. Spannungsgrößen zu vergleichen, können natürlich auch die entsprechenden Leistungsgrößen (Momentanleistung $D^2$ und mittlere Leistung $D_{eff}^2$) direkt miteinander in Beziehung gesetzt werden. Dann ändert sich der Vorfaktor des Logarithmus allerdings von 20 auf 10.

Anhand von Fig. 3 und 4 wird die Funktion des erfindungsgemäßen Verfahrens näher beschrieben. Das Signals S kann in eine Fourier-Reihe zerlegt werden, d. h. jedes beliebige Eingangssignals kann aus einer Reihe von Kosinussignalen mit unterschiedlichen Signalpegeln und Phasen aufgebaut werden. Im folgenden wird nur eine dieser Fourier-Komponenten betrachtet, die sich allgemein wie folgt schreiben läßt:

$$s_1(t) = A(t) \cdot \cos(\omega \cdot t + \varphi) \quad (4)$$

Die hier zu bestimmende Hüllkurve wäre also A(t). Bei dem Sendesignal handelt es sich um ein reelles Signal, das sich komplex wie folgt darstellen läßt:

$$s_1(t) = A(t) \cdot \left[\frac{1}{2} \cdot \left(e^{j(\omega \cdot t+\varphi)} + e^{-j(\omega \cdot t+\varphi)}\right)\right] = \frac{A(t)}{2} \cdot e^{j(\omega \cdot t+\varphi)} + \frac{A(t)}{2} \cdot e^{-j(\omega \cdot t+\varphi)} \quad (5)$$

Graphisch kann man sich diese Beziehung anhand eines Zeigerdiagramms, wie in Fig. 3 dargestellt, vorstellen.

Das Signal $s_1(t)$ besteht aus einem ersten, mit der Winkelfrequenz m linksdrehenden Drehzeiger 8 und einem zweiten, synchron dazu mit der gleichen Kreisfrequenz $\omega$ rechtsdrehenden Drehzeiger 9. Das erfindungsgemäße Weglassen des Bereichs negativer Frequenzen führt dazu, daß der Drehzeiger 9 unterdrückt wird. Umgekehrt führt das alternativ genauso mögliche Weglassen des Bereichs positiver Frequenzen dazu, daß der Drehzeiger 8 unterdrückt wird. Die Filterung im Frequenzbereich führt also zum Wegfall eines der beiden Summanden in Gleichung (5). Wenn in der Gleichung (4) beispielsweise die Komponente mit der negativen Frequenz, d. h. der linksdrehende Drehzeiger 9 in Fig. 3, weggelassen wird, so entsteht nach der Betragsbildung das folgende Ergebnis:

$$s_2(t) = \left|\frac{A(t)}{2} \cdot e^{+j(\omega - t+\varphi)}\right| = \left|\frac{A(t)}{2} \cdot e^{-j(\omega - t+\varphi)}\right| = \frac{|A(t)|}{2} \quad (6)$$

Der Betrag entspricht nach Fig. 3 der Länge des verbliebenen Zeigers. Bei der Verwendung des Signals $s_2(t)$ für die Bestimmung der CCDF-Diagramms spielt die Tatsache, daß $s_2(t)$ aufgrund der Betragsbildung nur positiv sein kann, keine Rolle. Bei dem CCDF-Diagramm werden Leistungen miteinander verglichen, die nur positiv sein können. Die Teilung durch den Faktor 2 beeinflußt das Ergebnis des CCDF-Diagramms ebenfalls nicht.

Die vorstehend anhand einer Fourier-Komponente gewonnene Erkenntnis kann natürlich ohne weiteres auf das Gesamtsignal, das eine lineare Überlagerung einer Vielzahl von Fourier-Komponenten darstellt, angewandt werden. Dazu sind in Fig. 4 die fouriertransformierten Abtastwerte $B_n$ dargestellt. Der Index n läuft hier von $-2^N/2$ bis $2^N/2-1$. Es ist erkennbar, daß der Bereich negativer Frequenzen 10 bei einem reellen Eingangs-Signal S das Spiegelbild des Bereichs 11 mit positiven Frequenzen ist.

Wird bei der weiteren Signalverarbeitung entweder der Bereich 10 negativer Frequenzen weggelassen, also

$B'_n=0$ für $n<0$ und
$B'_n=B_n$ für $n>0$

oder wird der Bereich 11 positiver Frequenzen weggelassen, also

$B'_n=B_n$ für $n<0$ und
$B'_n=0$ für $n>0$,

so ergibt sich nach der Rücktransformation in den Zeitbereich nach Bildung des Absolutbetrags automatisch die Hüllkurve, wie dies vorstehend anhand von Fig. 3 veranschaulicht wurde.

Zweckmäßig wird nicht nur entweder der Bereich 10 negativer Frequenzen oder der Bereich 11 positiver Frequenzen unterdrückt, sondern zusätzlich noch der Gleichanteil 12 für die Frequenz Null; bei der hier verwendeten Indizierung, also $B_0$ mit n=0. So wird ein eventuell vorhandener Gleichspannungsanteil (DC-Offset) unterdrückt. Da die ausgewerteten Signale aus der Zwischenfrequenz-Ebene stammen, dürften diese eigentlich keinen Gleichspannungsanteil enthalten. Ist dennoch ein Gleichspannungsanteil vorhanden, so stammt dieser beispielsweise von einem Gleichspannungs-Versatz des Analog/Digital-Wandlers und eine Entfernung dieses Gleichspannungsanteils erhöht die Meßgenauigkeit.

Ein Beispiel eines CCDF-Diagramms, dessen zugrundeliegende Hüllkurve mit dem erfindungsgemäßen Verfahren gewonnen wurde, ist in Fig. 1 dargestellt. Wie bereits erläutert, ist bei einem CCDF-Diagramm die relative Häufigkeit p dafür aufgetragen, daß ein bestimmter Pegel D auf einer logarithmischen Skala überschritten wird. Bei dem in Fig. 3 dargestellten Beispiel eines Eingangs-Signals, das nach dem 8VSB-Standard digital moduliert wurde, kommen Überschreitungen der Effektiv-Leistung mit 3 dB noch mit einer relativen Häufigkeit von etwa 10 % vor, während Überschreitungen der Effektiv-Leistung mit mehr als 6 dB schon mit einer deutlich kleineren relativen Häufigkeit als 1 % auftreten.

Wie bereits mehrfach betont, ist das erfindungsgemäße Verfahren nicht auf den Anwendungsfall der Erfassung von Momentan-Pegelwerten oder Momentan-Leistungwerten für ein CCDF-Diagramm beschränkt, sondern ganz allgemein zur Bestimmung der Hüllkurve eines modulierten Signals geeignet. Das Verfahren läßt sich sowohl mit einer digitalen Hardware, beispielsweise durch Verwendung von FPGA (Free Programmable Gate Array), oder mit einer Software in einem speziellen Prozessor, idealerweise in einem digitalen Signalprozessor (DSP), durchführen.

## Patentansprüche

1. Verfahren zum Bestimmen der Hüllkurve eines modulierten Eingangs-Signals (S) mit folgenden Verfahrensschritten:

   - Erzeugen digitaler Abtastwerte (An) durch digitales Abtasten (1) des Eingangs-Signals (S),
   - Erzeugen fouriertransformierter Abtastwerte ($B_n$) durch Fouriertransformieren (2) der digitalen Abtastwerte ($A_n$),
   - Erzeugen seitenbandbereinigter, fouriertransformierter Abtastwerte ($B'_n$) durch Entfernen (3) entweder des Bereichs (10) mit negativen Frequenzen oder des Bereichs (11) mit positiven Frequenzen von den fouriertransformierten Abtastwerten ($B_n$),
   - Erzeugen rücktransformierter Abtastwerte ($C_n$) durch inverses Fouriertransformieren (4) der seitenbandbereinigten, fouriertransformierten Abtastwerte ($B'_n$) und
   - Bilden (5) der Werte des Absolutbetrags ($D_m$) der rücktransformierten Abtastwerte ($C_n$).

2. Verfahren nach Anspruch 1,

**dadurch gekennzeichnet,**
**daß** zur Erzeugung der seitenbandbereinigten, fouriertransformierten Abtastwerte ($B'_n$) neben dem Bereich (10,11) mit den negativen bzw. positiven Frequenzen auch der Gleichanteil (12) bei der Frequenz Null entfernt wird.

**3.** Verfahren nach Anspruch 1 oder 2,
**dadurch gekennzeichnet,**
**daß** die rücktransformierten Abtastwerte ($C_n$) nur in einem solchen begrenzten Bereich (13) weiter verarbeitet werden, daß eine durch die Fouriertransformation und inverse Fouriertransformation hervorgerufene zyklische Fortsetzung unterdrückt wird.

**4.** Verfahren nach einem der Ansprüche 1 bis 3,
**dadurch gekennzeichnet,**
**daß** die Werte des Absolutbetrags ($D_m$) relativ zu einem Effektivwert ($D_{eff}$) der rücktransformierten Abtastwerte logarithmiert werden.

**5.** Verfahren nach Anspruch 4,
**dadurch gekennzeichnet,**
**daß** die Häufigkeitsverteilung der logarithmierten Werte als Funktion des logarithmierten Pegels (CCDF-Diagramm) angezeigt wird.

**6.** Computerprogramm-Produkt mit auf einem maschinenlesbaren Träger gespeicherten Programmcode-Mitteln, um alle Schritte gemäß einem der Ansprüche 1 bis 5 durchführen zu können, wenn das Programm auf einem Computer oder einem digitalen Signalprozessor ausgeführt wird.

**7.** Computerprogramm mit Programmcode-Mitteln, um alle Schritte gemäß einem der Ansprüche 1 bis 5 durchführen zu können, wenn das Programm auf einem Computer oder einem digitalen Signalprozessor ausgeführt wird.

## Claims

**1.** Method for determining the envelope curve of a modulated input signal (S) with the following method steps:

- generation of digital samples (An) by digital sampling (1) of the input signal (S),
- generation of Fourier-transformed samples ($B_n$) by Fourier transformation (2) of the digital samples (An),
- generation of sideband-cleaned, Fourier-transformed samples ($B'_n$) by removing (3) either the range (10) with negative frequencies or the range (11) with positive frequencies from the Fourier-transformed samples ($B_n$),
- generation of inverse-transformed samples ($C_n$) by inverse Fourier transformation (4) of the sideband-cleaned, Fourier-transformed samples ($B'_n$) and
- formation (5) of the values of the absolute value ($D_m$) of the inverse-transformed samples ($C_n$).

**2.** Method according to claim 1,
**characterised in that**
in order to generate the sideband-cleaned, Fourier-transformed samples ($B'_n$), the level component (12) at the zero frequency is also removed in addition to the range (10, 11) with the negative or positive frequencies.

**3.** Method according to claim 1 or 2,
**characterised in that**
the inverse-transformed samples ($C_n$) are processed further only in such a limited range (13) that a cyclic continuation, which is caused by the Fourier transform and inverse Fourier transform, is suppressed.

**4.** Method according to one of the claims 1 to 3,
**characterised in that**
the values of the absolute value ($D_m$) are logarithmised relative to an effective value ($D_{eff}$) of the inverse-transformed samples.

5. Method according to claim 4,
**characterised in that**
the frequency distribution of the logarithmised values is displayed as a function of the logarithmised level (CCDF diagram).

6. Computer programme product with programme code means which are stored on a machine-readable carrier in order to be able to implement all the steps according to one of the claims 1 to 5 when the programme is run on a computer or a digital signal processor.

7. Computer programme with programme code means in order to be able to implement all the steps according to one of the claims 1 to 5 when the programme is run on a computer or a digital signal processor.

## Revendications

1. Procédé pour le calcul de l'enveloppante d'un signal d'entrée (S) modulé comprenant les étapes de procédé suivantes:

- génération de valeurs de balayage ($A_n$) numériques par le balayage numérique (1) du signal d'entrée (S),
- génération de valeurs de balayage ($B_n$) transformées par la transformation de Fourier (2) par la transformation de Fourier des valeurs de balayage ($A_n$) numériques,
- génération de valeurs de balayage ($B'_n$) débarrassées de la bande latérale et transformées par la transformation de Fourier par enlèvement (3) soit de la plage (10) avec des fréquences négatives soit de la plage (11) avec des fréquences positives de valeurs de balayage ($B_n$) transformées par la transformation de Fourier,
- génération de valeurs de balayage ($C_n$) retransformées par la transformation de Fourier inverse (4) des valeurs de balayage ($B'_n$) débarrassées de la bande latérale et transformées par la transformation de Fourier et
- formation (5) des valeurs du montant absolu ($D_m$) des valeurs de balayage ($C_n$) retransformées.

2. Procédé selon la revendication 1,
**caractérisé en ce que**,
pour générer les valeurs de balayage ($B'_n$) débarrassées de la bande latérale et transformées par la transformation de Fourier, on enlève en plus de la plage (10, 11) avec les valeurs négatives ou positives également la partie identique (12) avec la fréquence zéro.

3. Procédé selon la revendication 1 ou 2,
**caractérisé en ce que**
les valeurs de balayage ($C_n$) retransformées ne sont traitées ultérieurement que dans une telle plage (13) limitée, de sorte qu'une poursuite cyclique, provoquée par la transformation de Fourier et par la transformation de Fourier inverse, est supprimée.

4. Procédé selon l'une quelconque des revendications 1 à 3,
**caractérisé en ce que**
les valeurs du montant absolu ($D_m$) sont logarithmées par rapport à une valeur effective ($D_{eff}$) des valeurs de balayage retransformées.

5. Procédé selon la revendication 4,
**caractérisé en ce que**
la répartition de fréquence des valeurs logarithmées est affichée en fonction du niveau logarithmé (diagramme CCDF).

6. Produit de programme informatique avec des moyens de code de programme mémorisés sur un support pouvant être lu à la machine, afin de pouvoir effectuer toutes les étapes selon l'une quelconque des revendications 1 à 5, lorsque le programme est exécuté sur un ordinateur ou un processeur de signal numérique.

7. Programme informatique avec des moyens de code de programme afin de pouvoir effectuer toutes les étapes selon l'une quelconque des revendications 1 à 5 lorsque le programme est exécuté sur un ordinateur ou un processeur de signal numérique.

Fig. 1

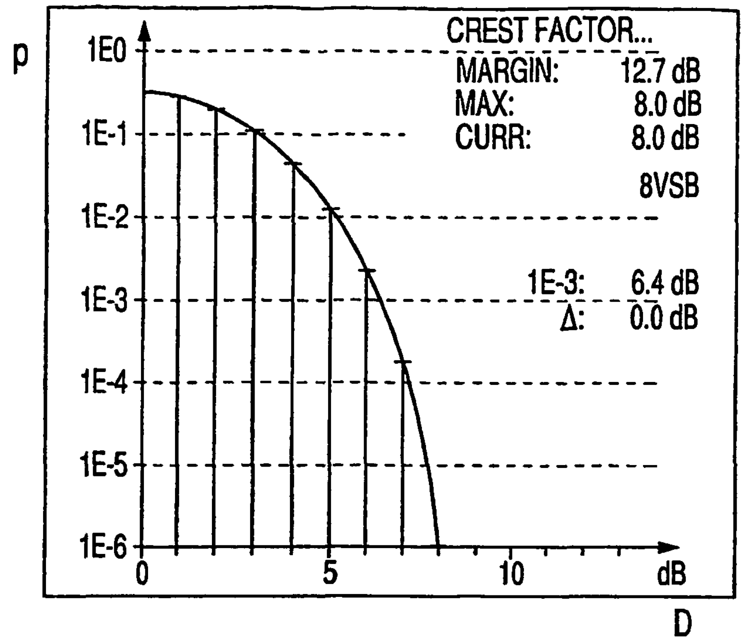


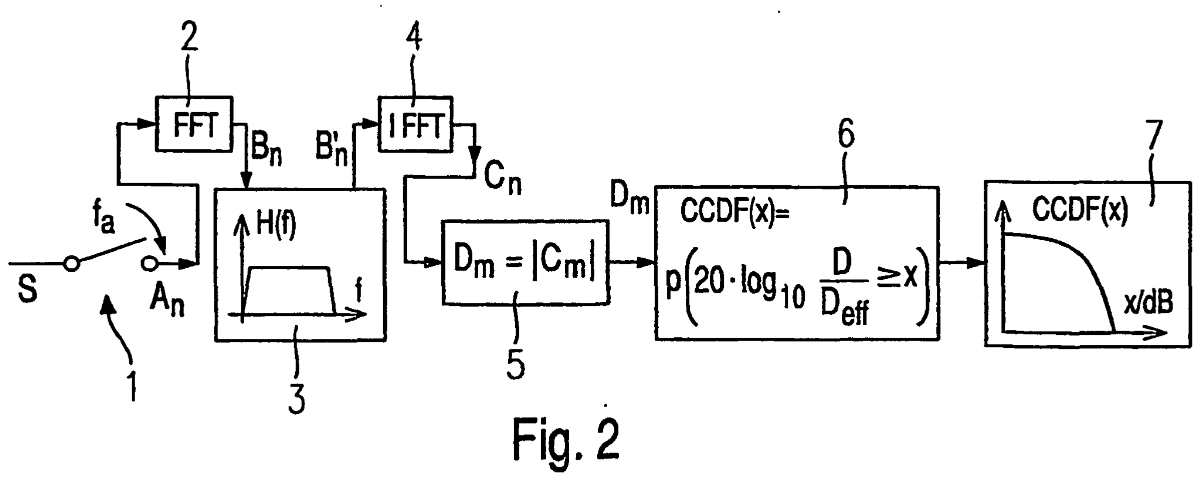


Fig. 2

Fig. 3

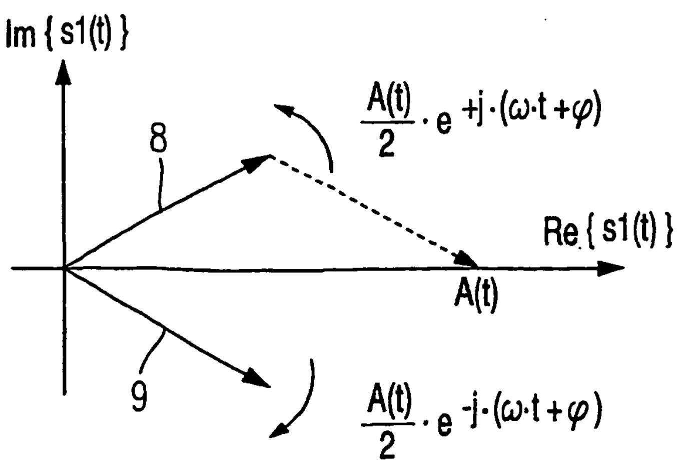

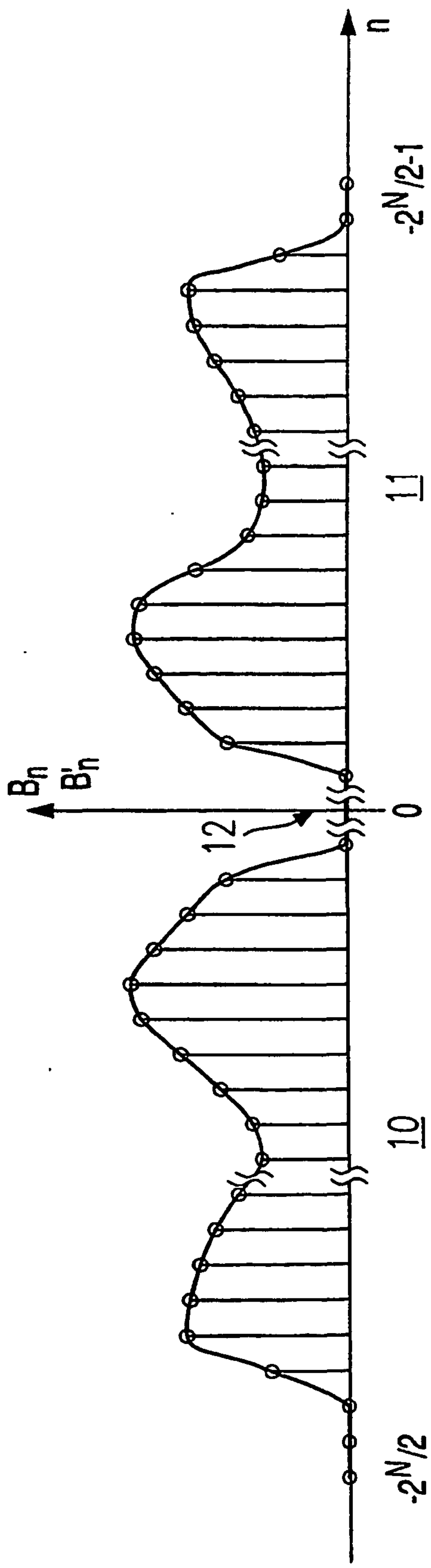


Fig. 4

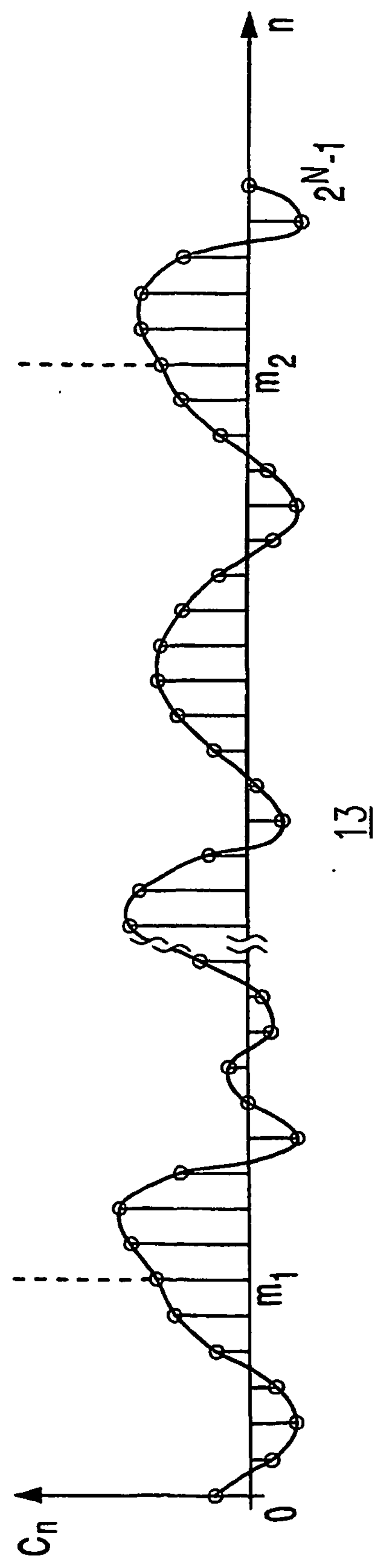


Fig. 5